# EUROPEAN PATENT SPECIFICATION

(11) **EP 2 466 676 B1**
(45) Date of publication and mention of the grant of the patent: **05.03.2014**
(21) Application number: 11194241.3
(22) Date of filing: 19.12.2011
(51) Int. Cl.: H01M 8/04, H01M 8/24, H01M 8/06

(54) **Fuel cell system**
Brennstoffzellensystem
Système de pile à combustible

(30) Priority: 20.12.2010 JP 2010282896
(43) Date of publication of application: 20.06.2012
(73) Proprietor: Aisin Seiki Kabushiki Kaisha, Aichi 448-8650 (JP)
(72) Inventor: Yabutani, Motohiko, Kariya-shi, Aichi 448-8650 (JP)
(74) Representative: TBK

(56) References cited:
- EP-A2- 1 416 561
- US-A1- 2006 014 063
- US-A1- 2008 318 099
- US-A1- 2010 151 294

## Description

### TECHNICAL FIELD

This disclosure relates to a fuel cell system that includes a cathode fluid conveying source such as a pump which supplies a gaseous cathode fluid (for example, air) to a cathode of a fuel cell.

### BACKGROUND DISCUSSION

JP 2008-114698A (Reference 1) discloses an electric pump control device which suppresses an excessive increase in current value by driving an electric pump so as to be turned on and off before a voltage of a power supply decreases as a countermeasure for a decrease in power supply voltage due to an inrush current at the time of activating the electric pump and an internal combustion engine system which uses the electric pump control device. JP 2007-128761A (Reference 2) discloses a technique relating to a fuel cell system capable of reducing a pressure loss of a circulating pump during the drainage of water and reducing power consumption and operating noise of a pump by setting the respective water capacity proportions between a circulating pump, a stack, a water tank, and a control valve in the system.

Reference 1 is a technique relating to the internal combustion engine system, but is not a technique relating to the fuel cell system. Furthermore, according to Reference 1, the inrush power is suppressed by controlling the pump so that it is turned on and off before the voltage of the power supply decreases at the time of activating the pump. However, there is a need to monitor whether the voltage of the power supply decreases, and there is a possibility of hunting in which the flow rate of the pump cannot reach the target flow rate thereof depending on the control method and the motor. According to Reference 2, it discloses a technique of reducing a pressure loss of a pump discharge circuit. Here, there is a demand for the volume ratio necessary for the configuration and the size of the system, and there is a limitation in design of the configuration of the system.

Furthermore, the document US 2006/014063 Al discloses a fuel cell system as set out in the preamble of claim 1.

A need thus exists for a fuel cell system which eases following of an actual flow rate of a cathode fluid supplied to a cathode with respect to a target flow rate thereof even when a draft resistance of a cathode fluid path increases, so that power feeding of an excessive current to a driving circuit of a cathode fluid conveying source is limited and insufficient power capacity of a power feeding system is avoided, which suppresses emergency stopping of the power feeding system due to the insufficient power capacity, does not excessively increase the size of the power supply of the power feeding system, and prevents an increase in cost of the system.

### SUMMARY

(1) According to a first aspect of this disclosure, there is provided a fuel cell system comprising: a fuel cell that includes an anode and a cathode; an anode gas path that supplies an anode fluid to the anode of the fuel cell; a cathode gas path that supplies a gaseous cathode fluid to the cathode of the fuel cell; a cathode fluid conveying source that is provided in the cathode gas path and conveys the cathode fluid to the cathode of the fuel cell; and a control system that controls power fed to a driving circuit of the cathode fluid conveying source such that an actual flow rate of the cathode fluid supplied to the cathode follows a target flow rate thereof and eases the following of the actual flow rate of the cathode fluid to the target flow rate when a draft resistance of the cathode gas path increases. The control system is characterized by (i) a normal stop process including stopping power generating operation of the fuel cell, supplying the anode fluid to the anode for a first predetermined time from the stop of the power generating operation, and supplying the cathode fluid to the cathode by a second predetermined time from the stop of the power generating operation; and (ii) an emergency stop process including stopping the power generating operation of the fuel cell, and stopping the supply of the anode fluid and the cathode fluid to the fuel cell, wherein the control system performs the normal stop process without performing the emergency stop process when the actual flow rate of the cathode fluid is smaller than the target flow rate thereof and a difference between the target flow rate and the actual flow rate continues to be a predetermined value or more for a third predetermined time or more, and wherein the control system performs a draft resistance recovery process of recovering the draft resistance of the cathode fluid path by removing foreign materials from the cathode fluid path, by feeding a current value, which is less than the specified current value by a predetermined current value, to the driving circuit of the cathode fluid conveying source for a fourth predetermined time before performing the emergency stop process and the normal stop process.

According to the above-described fuel cell system, basically, the control system controls the power fed to the driving circuit of the cathode fluid conveying source such that the actual flow rate of the cathode fluid supplied to the cathode follows the target flow rate thereof. That is, in the power generating operation of the system, the control system respectively set the target flow rate of the cathode fluid and the target flow rate of the anode fluid depending on the power generating output requested in the system. Furthermore, the control system performs basic control such that the actual flow rate of the cathode fluid follows the target flow rate thereof and the actual flow rate of the anode fluid follows the target flow rate thereof. Accordingly, the actual flow rate of the cathode fluid and the actual flow rate of the anode fluid increase depending on the power generating output requested in the system, and the power generating output requested in the system is obtained.

Incidentally, the draft resistance and the pressure loss of the cathode fluid path may excessively increase in some cases. For example, it is a case in which foreign materials block a part of the cathode fluid path. In this case, since the control system will control the power fed to the driving circuit of the cathode fluid conveying source such that the actual flow rate of the cathode fluid supplied to the cathode follows the target flow rate thereof, the current value which is fed to the driving circuit of the cathode fluid conveying source will excessively increase. However, at the time when the draft resistance of the cathode gas path increases, the control system limits the current value which is fed to the driving circuit of the cathode fluid conveying source. As a result, the following of the actual flow rate of the cathode fluid supplied to the cathode to the target flow rate thereof is eased.

According to the above configuration, even when the draft resistance and the pressure loss of the cathode fluid path increase, the control system eases the following of the actual flow rate of the cathode fluid supplied to the cathode to the target flow rate thereof. In this way, since an excessive current is prevented from being fed to the driving circuit of the cathode fluid conveying source, the insufficient power capacity of the power feeding system may be avoided. In this case, there is no need to emergently stop the power feeding system due to the insufficient power capacity of the power feeding system. It is desirable to avoid the emergency stop since it damages the system and shortens the lifetime of the system. Furthermore, according to the above configuration, since the control system prevents an excessive current from being fed to the driving circuit of the cathode fluid conveying source, there is no need to excessively increase the size of the power feeding system which feeds power to the driving circuit of the cathode fluid conveying source and an increase in manufacturing cost of the system may be prevented. As the anode fluid, a hydrogen gas or a hydrogen containing gas may be exemplified. As the cathode fluid, an oxygen containing gas such as air or an oxygen gas may be exemplified.

As described above, when the draft resistance and the pressure loss of the cathode fluid path increase, the control system eases the following of the actual flow rate of the cathode fluid supplied to the cathode with respect to the target flow rate thereof. For this reason, an excessive current is suppressed from being fed to the driving circuit of the cathode fluid conveying source. Thus, the insufficient power capacity of the power feeding system is avoided, there is no need to excessively increase the size of the power supply of the power feeding system which feeds power to the driving circuit of the cathode fluid conveying source, and an increase in manufacturing cost of the system may be prevented.

(2) According to a second aspect of this disclosure, there is provided the fuel cell system according to the first aspect, wherein the control system includes a current limiting component, and in controlling the power fed to the driving circuit of the cathode fluid conveying source such that the actual flow rate of the cathode fluid follows the target flow rate, when the draft resistance of the cathode gas path increases, the current limiting component prevents an excessive current which is equal to or larger than a specified current value Ireg from being fed to the cathode fluid conveying source so as to ease the following of the actual flow rate of the cathode fluid to the target flow rate. When the draft resistance of the cathode gas path increases, the control system controls the power fed to the driving circuit of the cathode fluid conveying source such that the actual flow rate of the cathode fluid supplied to the cathode follows the target flow rate thereof. However, the current limiting component which is a part of the control system prevents an excessive current from being fed to the driving circuit of the cathode fluid conveying source. As a result, an excessive current does not flow to the driving circuit of the cathode fluid conveying source. Thus, the following of the actual flow rate of the cathode fluid with respect to the target flow rate thereof is eased. Furthermore, as the current limiting component, a current limiting element or a current limiting circuit may be exemplified. For example, as the current limiting component, a current limiting resistor, a PTC thermistor having an electrical resistance increasing with an increase in temperature, or a circuit including these may be exemplified. The PTC thermistor is contrived based on a phenomenon in which the temperature of the PTC thermistor increases due to Joule heat generated from the PTC thermistor by an excessive current, and an equilibrium status is obtained by a large resistance value when the temperature reaches a trip temperature, so that the current value flowing to the PTC thermistor is limited.

(3) According to a third aspect of this disclosure, there is provided the fuel cell system according to the first aspect, wherein the anode fluid supplied to the anode is a hydrogen gas or a hydrogen containing gas, and the cathode fluid supplied to the cathode is an oxygen containing gas or an oxygen gas.

According to the present invention, the emergency stop process damages the system and shortens the lifetime of the system. Therefore, when the actual flow rate of the cathode fluid is smaller than the target flow rate thereof and the difference between the actual flow rate and the target flow rate continues to be a predetermined value or more for the third predetermined time or more, the control system assumes that the foreign materials remaining in the cathode fluid path block the cathode fluid path, and then performs the normal stop process without performing the emergency stop process. In the normal stop process, although the power generating operation of the fuel cell is stopped, the anode fluid having hydrogen with a reducing property is supplied to the anode for the first predetermined time from the stop of the power generating operation as well as the cathode fluid is supplied to the cathode for the second predetermined time from the stop of the power generating operation. Due to the anode fluid having hydrogen with a reducing property, the inside of the fuel cell or the like may be easily maintained in the hydrogen containing atmosphere (the reducing atmosphere), which may contribute to the suppression of the oxidation degradation of metal components or catalyst contained in the fuel cell or the like. Further, the cathode fluid may promote the cooling of the fuel cell.

When foreign materials such as laundry, fallen leaves, and vinyl bags are present, the foreign materials block a part of the cathode fluid path and increase the draft resistance and the pressure loss of the cathode fluid passageway. In this case, as the suction force of suctioning the gaseous cathode fluid increases by the control system which increases the power feeding amount to the driving circuit of the cathode fluid conveying source so that the actual flow rate of the gaseous cathode fluid supplied to the cathode of the fuel cell follows the target flow rate, there is a tendency that the foreign materials adhere to the cathode fluid path due to the influence of the suction force.

It is desirable to avoid the stop processes such as the emergency stop process and the normal stop process as much as possible. Therefore, before the stop processes, the control system temporarily feeds the current value less than the specified current value Ireg by the predetermined current value to the driving circuit of the cathode fluid conveying source for the fourth predetermined time. Accordingly, the suction force for which the cathode fluid conveying source suctions the cathode fluid temporarily decreases for the fourth predetermined time. For this reason, the suction force of the cathode fluid path temporarily deceases. As a result, the gravity, the external wind, or the like becomes larger than the suction force which is generated by the cathode fluid conveying source. Thus, there is an increasing possibility that the foreign materials fall due to the gravity, the external wind, or the like and are detached from the cathode fluid path. In this way, when the foreign materials are detached from the cathode fluid path, the draft resistance of the cathode fluid path automatically decreases, so that draft resistance is recovered. In this way, when the draft resistance is recovered, there is no need to perform not only the emergency stop process but also the normal stop process, the power generating operation of the system may be continuously performed, there is a contribution to a decrease in power generating cost, and the burden of the system is relieved.

(4) According to a fourth aspect of this disclosure, in the above-described aspect, the fuel cell system further includes a casing that includes an accommodation chamber that surrounds the fuel cell and the cathode fluid conveying source, and a communication opening that allows the accommodation chamber to communicate with external air and to which foreign materials increasing the draft resistance of the cathode fluid path are attachable, wherein the communication opening of the casing configures a part of the cathode fluid path. The casing includes the communication opening. The communication opening generally faces the external air so that the communication opening suctions the external air present outside the casing as a gaseous cathode fluid. For this reason, foreign materials such as laundry, fallen leaves, and vinyl bags present around the system adhere to the communication opening of the casing due to the suction force that is generated by the cathode fluid conveying source, which leads to concern that the draft resistance and the pressure loss of the cathode fluid path may increase. In this case, the control system controls the power fed to the driving circuit of the cathode fluid conveying source so that the actual flow rate of the cathode fluid supplied to the cathode follows the target flow rate thereof. Accordingly, the current value which is fed to the driving circuit of the cathode fluid conveying source abruptly rises, which gives a burden on the system. At this time, the control system prevents an excessive current which is equal to or larger than the specified current value Ireg from being fed to the driving circuit of the cathode fluid conveying source. In this way, the control system prevents an excessive current which is equal to or larger than the specified current value Ireg from being fed to the driving circuit of the cathode fluid conveying source. For this reason, even when there is a phenomenon in which the draft resistance and the pressure loss of the cathode fluid path increase due to the foreign materials, an excessive current is suppressed from being fed to the cathode fluid conveying source. Accordingly, only a current less than the specified current value Ireg flows to the cathode fluid conveying source. Thus, it is possible to avoid the insufficient power capacity of the power feeding system which feeds power to the cathode fluid conveying source so that it is driven. In this case, there is no need to emergently stop the power feeding system due to the insufficient power capacity. It is desirable to avoid the emergency stop since it damages the system and shortens the lifetime of the system. Furthermore, since an excessive current which is equal to or larger than the specified current value Ireg is prevented from being fed to the driving circuit of the cathode fluid conveying source, there is no need to excessively increase the size of the power supply of the power feeding system and an increase in manufacturing cost of the system may be prevented.

(5) According to a fifth aspect of the disclosure, in the above-described aspect, the fuel cell system includes: a tank that stores raw material water; an evaporation unit that produces steam by evaporating the raw material water inside the tank; and a reforming unit that forms the anode fluid by steam-reforming a fuel using the steam produced in the evaporation unit. Accordingly, the anode fluid which is formed by the steam-reforming is supplied to the anode of the fuel cell.

According to the above configuration, the draft resistance and the pressure loss of the cathode fluid path may increase due to the presence of foreign materials. Even in this case, originally, the control system controls the power fed to the driving circuit of the cathode fluid conveying source so that the actual flow rate of the cathode fluid supplied to the cathode follows the target flow rate thereof. Even in this case, the control system prevents an excessive current from being fed to the driving circuit of the cathode fluid conveying source. As a result, the following of the actual flow rate to the target flow rate is eased. In this way, the current limiting component prevents an excessive current from being fed to the driving circuit of the cathode fluid conveying source. For this reason, even when the draft resistance of the cathode fluid path increases due to the presence of the foreign materials, the insufficient power capacity of the power feeding system is avoided. As a result, there is no need to emergently stop the power feeding system due to the insufficient power capacity. It is desirable to avoid the emergency stop since it damages the system and shortens the lifetime of the system. Furthermore, since an excessive current is prevented from being fed to the driving circuit of the cathode fluid conveying source, there is no need to excessively increase the size of the power supply of the power feeding system and an increase in manufacturing cost of the system may be prevented.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating the concept of a fuel cell system according to an unclaimed example 1;
Fig. 2 is a graph illustrating a relationship between a flow rate per unit time of a cathode gas when foreign materials block a communication opening and a current value supplied to a cathode pump and time according to the prior art;
Fig. 3 is a graph illustrating a relationship between a flow rate per unit time of a cathode gas when foreign materials block a communication opening and a current value supplied to a cathode pump and time according to the unclaimed example 1;
Fig. 4 is a graph illustrating a relationship between a flow rate per unit time of a cathode gas when foreign materials block a communication opening and a current value supplied to a cathode pump and time according to an unclaimed example 2;
Fig. 5 is a graph illustrating a relationship between a flow rate per unit time of a cathode gas when foreign materials block a communication opening and a current value supplied to a cathode pump and time according to Embodiment 1; and
Fig. 6 is a diagram illustrating the concept of a fuel cell system in Application 1.

### DETAILED DESCRIPTION

### Unclaimed example 1

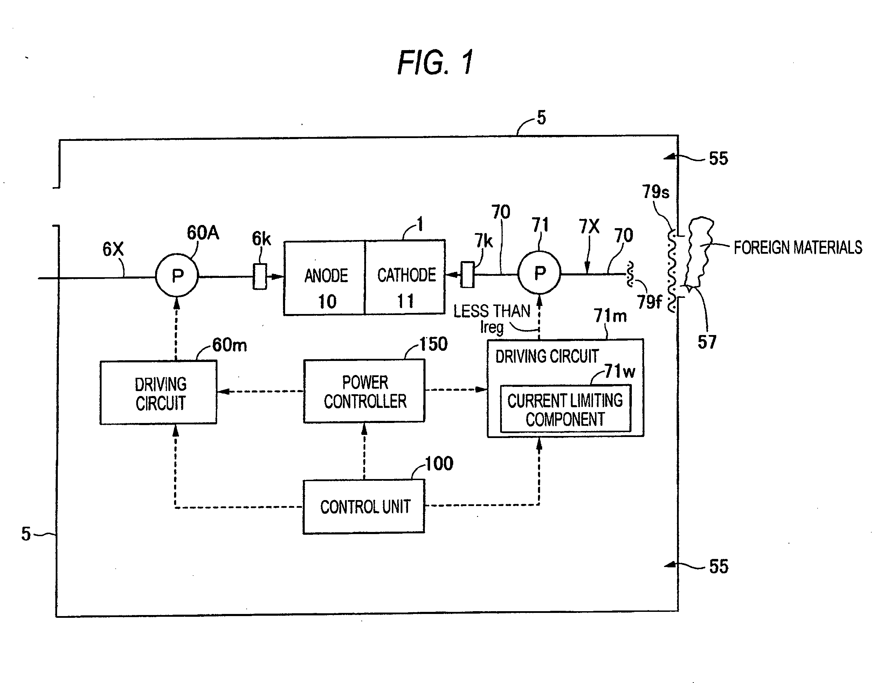

Fig. 1 illustrates an unclaimed example 1. A fuel cell system includes: a fuel cell 1 that includes an anode 10 and a cathode 11; an anode gas path 6X (an anode fluid path) that supplies an anode gas serving as an anode fluid to the anode 10 of the fuel cell 1; an anode pump 60A that serves as an anode fluid conveying source conveying an anode gas to the anode 10 of the fuel cell 1; a cathode gas path 7X (a cathode fluid path) that supplies a cathode gas to the cathode 11 of the fuel cell 1; a cathode flow meter 7k that is provided in the cathode gas path 7X and detects the actual flow rate of the cathode gas supplied to the cathode 11 through the cathode gas path 7X; an anode flow meter 6k that is provided in the anode gas path 6X and detects the actual flow rate of the anode gas supplied to the anode through the anode gas path 6X; a cathode pump 71 that serves as a cathode fluid conveying source for conveying a cathode gas as external air to the cathode 11 of the fuel cell 1; a casing 5 that includes an accommodation chamber 55; a power controller 150 that serves as a power feeding system for feeding power to the units such as the anode pump 60A and the cathode pump 71; and a control unit 100. The accommodation chamber 55 of the casing 5 accommodates the fuel cell 1, the cathode pump 71, the anode pump 60A, the power controller 150, and the control unit 100. The control unit 100 controls the power controller 150, the cathode pump 71, and the anode pump 60A.

The front end portion of the anode gas path 6X may be connected to the tank which encloses the anode gas or may be connected to a reformer which produces the anode gas by reforming fuel. The anode pump 60A is driven by the driving circuit 60m. The cathode pump 71 is driven by the driving circuit 71m. The driving circuit 71m of the cathode pump 71 includes a current limiting component 71w which prevents a current value, which is an excessive current equal to or larger than a specified current value Ireg (for example, an arbitrary value of 0.8 to 2A) from flowing to the cathode pump 71. The current limiting component 71w is disposed in series to the cathode pump 71. For this reason, as the regular range of the general power generating operation of the fuel cell 1, the current value of the cathode pump 71 is set to be less than the specified current value Ireg. The control system includes the control unit 100 and the current limiting component 71 w.

As shown in Fig. 1, the casing 5 includes a communication opening 57 which serves as an external air introducing opening used for allowing the accommodation chamber 55 to communicate with external air. The communication opening 57 configures a part of the cathode gas path 7X. That is, the cathode gas path 7X which is used to supply the cathode gas to the cathode includes: a pipe-like cathode gas passageway 70 which is provided with the cathode pump 71; a first filter 79f which is provided in the front end portion of the cathode gas passageway 70 for the purpose of purification; the accommodation chamber 55 of the casing 5; the communication opening 57 of the casing 5; and a second filter 79s which is provided in the communication opening 57. The filters 79f and 79s may be provided if necessary or may be removed.

The control unit 100 determines the target flow rate of the anode gas which is supplied to the anode 10 of the fuel cell 1 and the target flow rate of the cathode gas which is supplied to the cathode 11 depending on the power generating output requested in the system. Furthermore, the control unit 100 performs feed-back control on the power which is fed to the driving circuit 60m of the anode pump 60A such that the actual anode gas flow rate follows the target anode gas flow rate. In the same way, the control unit 100 performs feed-back control on the power which is fed to the driving circuit 71 m of the cathode pump 71 such that the actual cathode gas flow rate follows the target flow rate of the cathode gas that is supplied to the cathode 11 of the fuel cell 1. Thus, during the general operation, basically, the actual anode gas flow rate follows the target anode gas flow rate, and the actual cathode gas flow rate follows the target cathode gas flow rate. Accordingly, the power generating output requested in the fuel cell 1 is maintained.

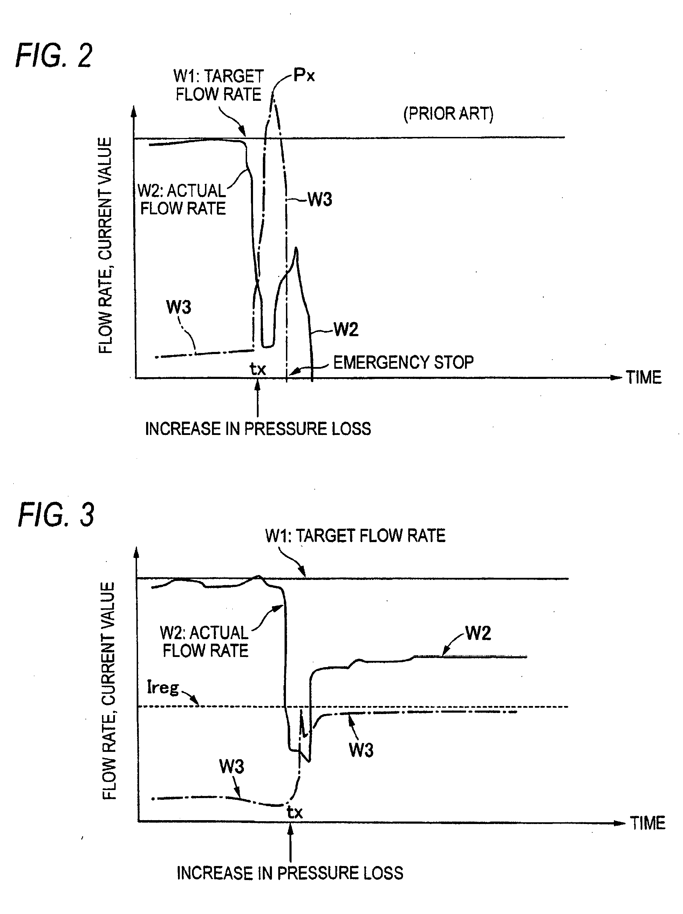

Here, the explanation will be added by referring to Fig. 2 relating to prior art and Fig. 3 relating to the embodiment. The horizontal axis indicates the time. The vertical axis indicates the cathode gas flow rate and the current value of the driving circuit of the cathode pump 71. In Figs. 2 and 3, the characteristic line W1 indicates the target cathode gas flow rate per unit time which is supplied to the cathode 11 of the fuel cell 1 as a target value. The characteristic line W2 indicates the actual cathode gas flow rate per unit time which is actually supplied to the cathode 11, and is measured by the flow meter 7k. The characteristic line W3 indicates the current value per unit time which is fed from the power controller 150 to the cathode pump 71.

Since the cathode pump 71 is driven in the power generating operation of the system, the external air of the casing 5 is suctioned as the cathode gas from the communication opening 57 into the accommodation chamber 55 of the casing 5, and is supplied from the passageway 70 to the cathode 11 through the flow meter 7k. Thus, during the power generating operation, a suction force which suctions the external air of the casing 5 as the cathode gas is exerted on the communication opening 57 of the casing 5. Foreign materials such as laundry, fallen leaves, and vinyl bags adhere to the communication opening 57 of the casing 5 due to the suction force of the communication opening 57, so that there is concern that the entirety or a part of the communication opening 57 may be occupied by the foreign materials (see Fig. 1). In this case, there is concern that the draft resistance and the pressure loss of the cathode gas path 7X excessively increases and the pressure loss of the cathode gas path 7X abruptly increases at the time tx due to the presence of the foreign materials.

Even in this case, the control unit 100 originally would perform feed-back control on the power which is fed to the driving circuit 71m of the cathode pump 71 such that the actual cathode gas flow rate follows the target cathode gas flow rate which is supplied to the cathode 11. However, in this case, as depicted by the characteristic line W3 of Fig. 2, an excessive current is fed to the driving circuit 71m of the cathode pump 71 from the time tx, so that an excessively high current peak Px (see Fig. 2) is formed. In this case, in the prior art, the system emergently stops the power generating operation. That is, in the prior art, since the actual flow rate rarely follows the target cathode gas flow rate due to an abrupt increase in the draft resistance and the pressure loss, an excessive current is abruptly fed to the cathode pump 71 so as to excessively increase the number of rotations of the cathode pump 71, but the system is emergently stopped.

With regard to this point, according to this example, as shown in Fig. 1, the specified current value Ireg is set as the driving circuit 71m of the cathode pump 71 as the maximal current value which is fed to the cathode pump 71. Due to the current limiting component 71w, an excessive current which is equal to or larger than the specified current value Ireg is prevented from being fed to the driving circuit 71m of the cathode pump 71. As a result, even when foreign materials such as laundry, fallen leaves, and vinyl bags block a part or the entirety of the communication opening 57, an excessive current does not flow to the cathode pump 71, and the system is not emergently stopped. That is, the actual cathode gas flow rate per unit time which is supplied to the cathode 11 is decreased by easing the following of the actual cathode gas flow rate to the target cathode gas flow rate. In the same way, the control unit 100 decreases the actual anode gas flow rate per unit time supplied to the anode 10 so as to correspond to a decrease in the actual flow rate of the cathode gas, and prevents the power generating output of the fuel cell 1. This is because the balance between the cathode gas and the anode gas is maintained.

In this way, according to this example, as described above, since the current limiting component 71w prevents an excessive current which is equal to or larger than the specified current value Ireg from being fed to the driving circuit 71m of the cathode pump 71, the insufficient power capacity of the power controller 150 is avoided. In this case, the power controller 150 may not be emergently stopped due to the insufficient power capacity. It is desirable to avoid the emergency stop since it damages the system and shortens the lifetime of the system. Furthermore, according to this example, since an excessive current which is equal to or larger than the specified current value Ireg is prevented from being fed to the cathode pump 71 even when foreign materials such as laundry, fallen leaves, and vinyl bags block a part or the entirety of the communication opening 57, there is no need to excessively increase the size of the power supply of the power controller 150 and there is a contribution to a decrease in cost of the power controller 150 and further a decrease in cost of the fuel cell system.

### Unclaimed example 2

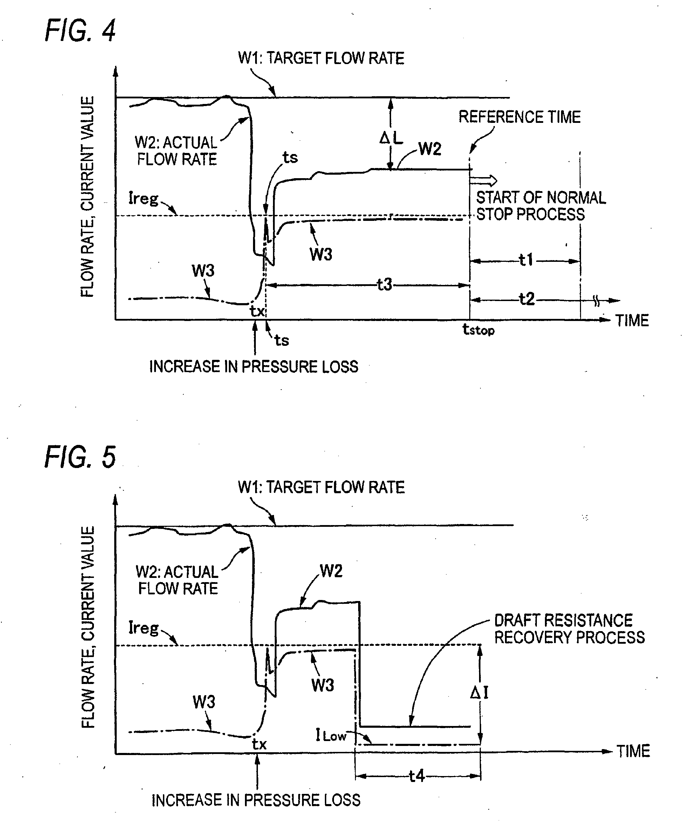

Fig. 4 illustrates unclaimed example 2. Since the example basically has the same configuration and the same operational effect as those of unclaimed example 1, Figs. 1 and 3 are basically used. The control unit 100 is configured to perform the normal stop process and the emergency stop process. In the normal stop process, the anode 10 and the cathode 11 are electrically interrupted from a load so as to stop the power generating operation of the fuel cell 1. Furthermore, an anode gas containing hydrogen is supplied to the anode 10 for a first predetermined time t1 from the reference time tₛₜₒₚ as well as a cathode gas as air is supplied to the cathode 11 for a second predetermined time t2 from the reference time tₛₜₒₚ. As the reference time tₛₜₒₚ, the time relating to the stop of the power generating operation may be adopted, and the time instructing the stop of the power generating operation or the time indicating the actual stop of the power generating operation may be exemplified. A relationship of t2>t1 is desirable, but it may be t2=t1, t2≈t1, and t2<t1. In the emergency stop process, the anode 10 and the cathode 11 are electrically interrupted from a load so as to promptly stop the power generating operation of the fuel cell 1. Furthermore, the driving operation of the pumps 60A and 71 is stopped, and the supply of the anode gas and the cathode gas to the fuel cell 1 is emergently stopped. Since the emergency stop damages the system or shortens the lifetime thereof, it is desirable to stop the system in the normal stop process as much as possible.

Therefore, as shown in Fig. 4, when a difference ΔL between the actual cathode gas flow rate and the target cathode gas flow rate depicted by the characteristic line W1 continues to be a predetermined value ΔLₛₑₜ (not shown) or more for a third predetermined time t3 or more from a time ts (a second reference time), the control unit 100 assumes that foreign materials were remaining in the cathode fluid path and block the cathode gas path 7X. Then, the control unit 100 performs the normal stop process without performing the emergency stop process. The time ts indicates a time at which the current value to the cathode pump 71 forms a peak with an increase in the draft resistance and the pressure loss. The time at which the actual cathode gas flow rate abruptly decreases may be set as the second reference time. The predetermined value ΔLₛₑₜ is appropriately set depending on the system, and indicates a difference which does not adversely affect the unit of the system even when the actual cathode gas flow rate is smaller than the target cathode gas flow rate. The third predetermined time t3 is appropriately set depending on the system, and indicates a time which does not adversely affect the unit of the system even when the actual cathode gas flow rate is smaller than the target cathode gas flow rate. In the normal stop process, the fuel cell 1 becomes an opened circuit by stopping the power generating operation of the fuel cell 1, but the anode gas is supplied to the anode 10 of the fuel cell 1 for the first predetermined time t1 from the reference time tₛₜₒₚ as the time indicating the stop of the power generating operation. The oxidation degradation inside the pipe system and the fuel cell 1 is suppressed due to the anode gas containing hydrogen with a reducing property. In this case, there is a contribution to the suppression of the oxidation degradation of metal components or catalyst contained in the fuel cell 1 or the like. When the reforming unit is provided, there is a contribution to the suppression of the oxidation degradation of metal components or catalyst contained in the reforming unit or the like. Furthermore, the cathode gas may be supplied to the cathode 11 of the fuel cell 1 for the second predetermined time t2 from the reference time tₛₜₒₚ as the time indicating the stop of the power generating operation, so that the cathode 11 and further the fuel cell 1 may be cooled. In this way, the normal stop process has a smaller system load than that of the emergency stop process.

### Embodiment 1

Fig. 5 illustrates Embodiment 1. The embodiment basically has the same configuration and the same operational effect as those of unclaimed example 1. Foreign materials such as laundry and fallen leaves may block a part of the cathode gas path 7X (for example, the communication opening 57 of the casing 5) and excessively increase the draft resistance and the pressure loss of the cathode gas path. In this case, foreign materials such as laundry may adhere to a part of the cathode gas path 7X (for example, the communication opening 57) due to the influence of the suction force as the suction force of the cathode gas increases by increasing the power feeding amount to the driving circuit 71m of the cathode pump 71 so that the actual flow rate follows the target flow rate of the cathode gas supplied to the cathode 11 of the fuel cell 1. In this case, in the prior art, the operation of the system is stopped by the emergency stop process or the normal stop process. The emergency stop process adversely affects the system, which is not desirable for the long lifetime of the system. Even in the normal stop process, the power generating operation of the fuel cell 1 is stopped, which is not desirable for a decrease in power generating cost. Therefore, according to this embodiment, as shown in Fig. 5, the control unit 100 temporarily feeds a current value I_{LOW} lower than the specified current value Ireg by ΔI to the driving circuit 71m of the cathode pump 71 for a fourth predetermined time t4 before the normal stop process. In this case, the number of rotations per unit time of the cathode pump 71 may be set to be less than 1/3, 1/4, and 1/5 of the case of the rated operation. For example, the number of rotations of the cathode pump 71 is set to the minimal rotation number area thereof. The rotation of the cathode pump 71 may be stopped depending on cases. The fourth predetermined time t4 is appropriately set depending on the system.

In this way, the draft resistance recovery process is performed which decreases the suction force of the cathode gas. As a result, the suction force of the cathode pump 71 is noticeably decreased. For this reason, the gravity or the external wind may be larger than the suction force exerted on foreign materials such as laundry suctioned to and adhering to the communication opening 57 of the casing 5. In this case, the foreign materials fall from the communication opening 57 due to the gravity or the external wind, so that they may be detached from the communication opening 57. In this way, when the foreign materials are detached from the communication opening 57 and are detached from the cathode gas path 7X, the draft resistance and the pressure loss of the cathode gas of the cathode gas path 7X are decreased, so that they are automatically recovered. Accordingly, the power generating operation of the system may be continuously performed without performing both the normal stop process and the easing stop process of the system. Furthermore, if the draft resistance is not recovered even when the control unit 100 performs the draft resistance recovery process, the control unit 100 performs the normal stop process. The draft resistance recovery process may be performed at least once. It is desirable to intermittently perform the draft resistance recovery process plural times.

### Embodiment 2

The embodiment basically has the same configuration and the same operational effect as those of Embodiment 1. According to this embodiment, the control unit 100 alternately switches a current value I_{LOW} lower than the specified current value Ireg by a predetermined current value ΔI₁ (not shown) and a current value I_{HIGH} (I_{HIGH}>I_{LOW}) lower than the specified current value Ireg by a predetermined current value ΔI₂ (not shown) so as to be pulsated before the emergency stop process and the normal stop process. Accordingly, the draft resistance recovery process which repetitively increases and decreases the suction force of the cathode gas is performed. As a result, the suction force of the communication opening 57 repetitively increases and decreases so as to be changed. For this reason, possibility that foreign materials such as laundry suctioned to and adhering to the communication opening 57 move will increase. Accordingly, foreign materials may be removed from the communication opening 57 by dropping the foreign materials from the communication opening 57 due to the gravity or the external wind. In this way, when the foreign materials are removed from the cathode gas path 7X, the draft resistance and the pressure loss of the cathode gas of the cathode gas path 7X decrease, that is, they are automatically recovered, and the power generating operation can be continuously performed. In this case, since the cathode gas path 7X returns to the normal state, the emergency stop process and even the normal stop process can be avoided.

### Embodiment 3

The embodiment basically has the same configuration and the same operational effect as those of the above-described respective embodiments. In this case, since the first filter 79f and the second filter 79s shown in Fig. 1 are blocked, this is the same as the case where the draft resistance and the pressure loss of the cathode gas path 7X increase. That is, when the draft resistance and the pressure loss of the cathode gas path 7X increase due to the presence of the foreign materials which block the first filter 79f and/or the second filter 79s, it is possible to prevent an excessive current which is equal to or larger than the specified current value Ireg from being fed to the cathode pump 71 in the case where the power fed to the driving circuit 71m of the cathode pump 71 is controlled such that the actual cathode gas flow rate follows the target cathode gas flow rate supplied to the cathode 11.

### Application 1

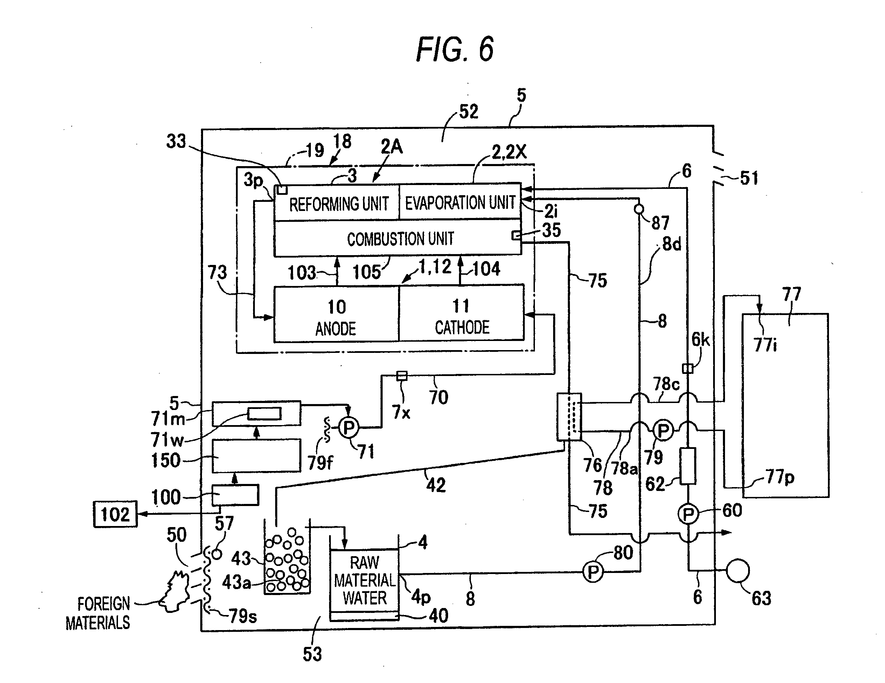

Fig. 6 schematically illustrates the concept of Application 1. As shown in Fig. 6, a fuel cell system includes: a stack 12 which is formed in the fuel cell 1; an evaporation unit 2 which produces steam by evaporating liquid water; a reforming unit 3 which forms an anode gas by reforming fuel using the stem produced in the evaporation unit 2; a combustion unit 105 which heats the evaporation unit 2 and the reforming unit 3; a tank 4 which stores liquid raw material water supplied to the evaporation unit 2; and a casing 5 which accommodates these units. The reforming unit 3 includes a temperature sensor 33.

The stack 12 of the fuel cell 1 includes an anode (a fuel electrode) 10 and a cathode (an oxidation electrode) 11 with an ion conductor interposed therebetween. For example, a solid oxide fuel cell (an operation temperature: for example, 400°C or more) called 'SOFC' may be adopted as an application example. The anode exhaust gas which is discharged from the anode 10 is supplied to the combustion unit 105 through an anode exhaust gas path 103. The cathode exhaust gas which is discharged from the cathode 11 is supplied to the combustion unit 105 through the cathode exhaust gas path 104. The combustion unit 105 burns the anode exhaust gas and the cathode exhaust gas so as to heat the evaporation unit 2 and the reforming unit 3. The combustion unit 105 is provided with a combustion exhaust gas path 75, and a combustion exhaust gas containing a burned gas and an unburned gas in the combustion unit 105 is discharged to the atmosphere through the combustion exhaust gas path 75. The reforming unit 3 is formed by supporting reforming catalyst in a support member such as ceramics provided with plural gas passageways, and is provided adjacent to the evaporation unit 2. The reforming unit 3 and the evaporation unit 2 constitute the reformer 2A, and are surrounded by a heat insulating wall 19 together with the fuel cell 1, thereby forming a power generating module 18. The reforming unit 3 includes the temperature sensor 33 which detects the temperature of the reforming unit 3, and the combustion unit 105 includes an ignition unit 35 which serves as a heater igniting fuel. The ignition unit 35 may be of any type if the fuel of the combustion unit 105 can be ignited. The signal of the temperature sensor 33 is input to the control unit 100. The control unit 100 operates the ignition unit 35 so that the combustion unit 105 is ignited and becomes hot. The control unit 100 includes an alarm 102.

During the operation, the reformer 2A is heated inside the heat insulating wall 19 so as to be appropriate for the reforming reaction. During the operation, the evaporation unit 2 is heated by the combustion unit 105 so that the raw material water is heated to be steam. In the case where the fuel cell 1 is an SOFC type, since the anode exhaust gas discharged from the anode 10 and the cathode exhaust gas discharged from the cathode 11 are burned in the combustion unit 105, the reforming unit 3 and the evaporation unit 2 are simultaneously heated. The fuel passageway 6 is used to supply fuel from a fuel source 63 to the reformer 2A, and includes a fuel pump 60 and a desulfurizer 62. The cathode gas passageway 70 which supplies a cathode gas (air) to the cathode 11 is connected to the cathode 11 of the fuel cell 1. The cathode gas passageway 70 is provided with the cathode pump 71 which serves as a conveying source conveying the cathode gas. As shown in Fig. 6, the casing 5 includes an intake port 50 (a communication opening) which communicates with external air, an exhaust port 51, an upper accommodation chamber 52 which serves as a first chamber, and a lower accommodation chamber 53 which serves as a second chamber. Thus, the cathode gas path 7X which supplies the cathode gas to the cathode pump 71 includes the cathode gas passageway 70, the accommodation chambers 52 and 53 of the casing 5, and the intake port 50 which serves as a communication opening.

The fuel cell 1 is accommodated at the upper side of the casing 5, that is, the upper accommodation chamber 52 together with the reforming unit 3 and the evaporation unit 2. The lower accommodation chamber 53 of the casing 5 accommodates the tank 4 which stores liquid water that is reformed in the reforming unit 3. The tank 4 is provided with a heating unit 40 having a heating function such as an electric heater. The heating unit 40 is used to heat the water stored in the tank 4, and may be formed as an electric heater or the like. When an environmental temperature such as a temperature of external air is low, the water of the tank 4 is heated by the heating unit 40 so as not to be frozen based on the command from the control unit 100. Furthermore, basically, it is desirable that the water level inside the tank 4 be substantially constant. As shown in Fig. 6, the casing 5 is provided with a pipe which is a water feeding passageway 8 that allows an outlet port 4p of the tank 4 near the lower accommodation chamber 53 to communicate with an inlet port 2i of the evaporation unit 2 near the upper accommodation chamber 52. The water feeding passageway 8 is a passageway which supplies the water stored inside the tank 4 from the inlet port 2i of the tank 4 to the evaporation unit 2. The water feeding passageway 8 and the evaporation unit 2 constitute a steam producing system 2X. The water feeding passageway 8 is provided with a water pump 80 which serves as a water conveying source that conveys the water inside the tank 4 to the evaporation unit 2. Furthermore, the water feeding passageway 8 is configured to communicate with the atmosphere through the evaporation unit 2, the reforming unit 3, the stack 12, and the like. The control unit 100 controls the pumps 80, 71, 79, and 60.

When the pump 60 is driven at the time of activating the system, the fuel flows from the fuel passageway 6 to the combustion unit 105 through the evaporation unit 2, the reforming unit 3, the anode fluid passageway 73, the anode 10 of the fuel cell 1, and the passageway 103. The cathode fluid (air) flows to the combustion unit 105 through the cathode fluid passageway 70, the cathode 11, and the passageway 104 by the cathode pump 71. When the ignition unit 35 is ignited in this state, combustion occurs in the combustion unit 105, so that the reforming unit 3 and the evaporation unit 2 are heated. In this way, when the pump 80 is driven in normal mode while the reforming unit 3 and the evaporation unit 2 are heated, the water inside the tank 4 is conveyed inside the supply passageway 8 from the outlet port 4p of the tank 4 toward the inlet port 2i of the evaporation unit 2, and is heated in the evaporation unit 2 so as to be steam. The steam moves to the reforming unit 3 together with the fuel (gaseous fuel is desirable, but liquid fuel may be used if necessary) supplied from the fuel passageway 6 by the pump 60. The fuel in the reforming unit 3 is reformed into the steam, so that it becomes an anode fluid (a hydrogen containing gas). The anode fluid is supplied to the anode 10 of the fuel cell 1 through the anode fluid passageway 73. Furthermore, the cathode fluid (an oxygen containing gas such as air inside the casing 5 or an oxygen gas) is supplied to the cathode 11 of the fuel cell 1 through the cathode fluid passageway 70. Accordingly, the fuel cell 1 generates power. The off gas of the anode fluid discharged from the anode 10 and the off gas of the cathode fluid discharged from the cathode 11 pass through the passageways 103 and 104, and reach the combustion unit 105, so that these gases are burned in the combustion unit 105. The high-temperature exhaust gas is discharged to the outside of the casing 5 through the exhaust gas passageway 75. Furthermore, in the case where the fuel is methane series, it is considered that the anode gas is produced by the steam-reforming based on the following equation (1). However, the fuel is not limited to the methane series.

CH₄+ 2H₂O→ 4H₂+ CO₂ CH₄ + H₂O→ 3H₂ + CO (1)...

The anode gas is supplied from the outlet port 3p of the reforming unit 3 to the anode 10 of the fuel cell 1 through the anode gas passageway 73. Furthermore, when the pump 71 is driven, the cathode gas (an oxygen containing gas, air inside the casing 5) is supplied to the cathode 11 of the fuel cell 1 through the cathode gas passageway 70. In this state, a power generating reaction occurs in the fuel cell 1.

In the above-described power generating reaction, it is considered that the reaction (2) basically occurs in the anode 10 to which a hydrogen containing gas as an anode gas is supplied. It is considered that the reaction (3) basically occurs in the cathode 11 to which air (oxygen) is supplied as a cathode gas. Oxygen ion (O²⁻) generated in the cathode 11 conducts electrolyte from the cathode 11 toward the anode 10.

H₂+ O²⁻→ H₂O + 2e⁻ (2)...

In the case where CO is contained, CO + O²⁻→ CO₂+ 2e⁻

1/2O₂⁺ 2^{e-} → O²⁻ (3)...

The anode off gas subjected to the power generating reaction contains hydrogen which does not cause the power generating reaction yet. The cathode off gas contains oxygen which does not react with the power generating reaction. The anode off gas and the cathode off gas are discharged to the combustion unit 105 and are burned therein. The anode off gas and the cathode off gas after the burning become an exhaust gas. The exhaust gas flows to the exhaust passageway 75 through a gas passageway of a heat exchanger 76, and is discharged to the outside of the casing 5 from the exhaust port at the front end of the exhaust passageway 75. As shown in Fig. 6, the exhaust passageway 75 is provided with the heat exchanger 76 which has a condensation function. A hot water passageway 78 and a hot water pump 79 are provided so as to be connected to the hot water tank 77. The hot water passageway 78 includes an outward path 78a and a return path 78c. When the hot water pump 79 is driven, the low-temperature water of the hot water tank 77 is discharged from an ejection port 77p of the hot water tank 77 and passes through the outward path 78a. Then, the water reaches the heat exchanger 76, and is heated in the heat exchanger 76. The water heated in the heat exchanger 76 returns from the return port 77i to the hot water tank 77 through the return path 78c. In this way, the water of the hot water tank 77 becomes hot water. The steam contained in the exhaust gas is condensed in the heat exchanger 76, and hence becomes condensed water. The condensed water is supplied to a water purifying unit 43 by the gravity or the external wind through the condensed water passageway 42 which extends from the heat exchanger 76. Since the water purifying unit 43 includes a water purifier 43a such as an ion exchange resin, impurities of the condensed water are eliminated. The water from which the impurities are eliminated moves to the tank 4, and is stored in the tank 4. When the water pump 80 is driven, the water inside the tank 4 is supplied to the high-temperature evaporation unit 2 through the water feeding passageway 8, and becomes steam in the evaporation unit 2. Then, the steam is supplied to the reforming unit 3, and is consumed in the reforming reaction that reforms fuel in the reforming unit 3.

The system may perform a stop process. The stop process includes a normal stop process and an emergency stop process. In the normal stop process, the fuel cell 1 is made to be in an opened-circuit potential, the power generating operation of the fuel cell 1 is stopped, and the anode gas is supplied to the anode 10 for a first predetermined time t1 from the stop of the power generating operation. In this case, since the anode gas containing a high concentration of hydrogen with a reducing property is supplied to the reforming unit 3 and the anode 10, the oxidation degradation of metal components or catalyst of these is suppressed. Furthermore, the cooling of the fuel cell 1 or the like may be promoted by supplying the cathode gas to the cathode 11 for a second predetermined time t2 from the stop of the power generating operation. Here, a relationship of t2>t1 may be set. In the emergency stop process, the power generating operation of the fuel cell 1 is stopped, and the supply of the anode gas and the cathode gas to the fuel cell 1 is emergently stopped. For this reason, the load on the system is large, and the degradation of catalyst is caused, which is not advantageous from the viewpoint of the lifetime of the system.

However, even in this application, the driving circuit 71m of the cathode pump 71 is provided with a current limiting component 71 w which limits the current value fed to the cathode pump 71 to be less than the specified current value Ireg. For this reason, in the case where the power fed to the driving circuit 71 m of the cathode pump 71 is controlled so that the actual cathode gas flow rate follows the target cathode gas flow rate supplied to the cathode 11 of the fuel cell 1, when the draft resistance and the pressure loss of the cathode gas path increase due to the presence of the foreign materials, the control unit 100 prevents an excessive current which is equal to or larger than the specified current value Ireg from being fed to the cathode pump 71 using the current limiting component 71w. Thus, the current value which flows to the cathode pump 71 is limited to be less than the specified current value Ireg. Thus, the following of the actual cathode gas flow rate with respect to the target cathode gas flow rate is eased.

Even in this application, when a difference between the actual flow rate and the target flow rate of the cathode gas continuously becomes a predetermined value or more for a third predetermined time t3, the control unit 100 performs the normal stop process without performing the emergency stop process. Furthermore, the draft resistance recovery process according to the above-described embodiment may be performed. Even in this application, there is concern that the entirety or a part of the intake port 50 may be blocked due to the presence of foreign materials such as laundry or fallen leaves. Even in this case, the current limiting component 71w may prevent an excessive current which is equal to or larger than the specified current value Ireg from being fed to the cathode pump 71. Furthermore, in the case where the first filter 79f and/or the second filter 79s are blocked due to the presence of foreign materials such as sand particles, the current limiting component 71w may prevent an excessive current which is equal to or larger than the specified current value Ireg from being fed to the cathode pump 71.

### Others

The principles, preferred embodiment and mode of operation of the present invention have been described in the foregoing specification. However, the invention which is intended to be protected is not be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within spirit and scope of the present invention as defined in the claims, be embraced thereby. For example, the cathode fluid conveying source is not limited to the pump, and a blowing source such as a blower or a fan may be used. That is, a blowing source may be adopted which conveys a cathode fluid to the cathode 11. The heating unit 40 is provided in the tank 4, but this disclosure is not limited thereto. The heating unit 40 may be eliminated. If necessary, the fuel cell 1 may be applied to a polymer electrolyte fuel cell, a molten carbonate fuel cell, or a phosphoric acid fuel cell. The polymer electrolyte fuel cell may be used if the fuel cell may be activated when the evaporation unit is maintained to be equal to or higher than a temperature at which steam may be produced even when the power generating operation of the stack is stopped. The fuel to be used may be town gas, LPG, bio gas, gasoline, kerosene, alcohol, and the like.
A fuel cell system is provided. The fuel cell system includes a fuel cell that includes an anode and a cathode, an anode gas path that supplies an anode fluid to the anode of the fuel cell, a cathode gas path that supplies a gaseous cathode fluid to the cathode of the fuel cell, a cathode fluid conveying source that is provided in the cathode gas path and conveys the cathode fluid to the cathode of the fuel cell, and a control system that controls power fed to a driving circuit of the cathode fluid conveying source such that an actual flow rate of the cathode fluid supplied to the cathode follows a target flow rate thereof and eases the following of the actual flow rate of the cathode fluid to the target flow rate when a draft resistance of the cathode gas path increases.

## Claims

1. A fuel cell system comprising:
a fuel cell that includes an anode and a cathode;
an anode gas path that supplies an anode fluid to the anode of the fuel cell;
a cathode gas path that supplies a gaseous cathode fluid to the cathode of the fuel cell;
a cathode fluid conveying source that is provided in the cathode gas path and conveys the cathode fluid to the cathode of the fuel cell; and
a control system that controls power fed to a driving circuit of the cathode fluid conveying source such that an actual flow rate of the cathode fluid supplied to the cathode follows a target flow rate thereof and eases the following of the actual flow rate of the cathode fluid to the target flow rate when a draft resistance of the cathode gas path increases,
the control system is **characterized by**:
(i) a normal stop process including stopping power generating operation of the fuel cell, supplying the anode fluid to the anode for a first predetermined time from the stop of the power generating operation, and supplying the cathode fluid to the cathode by a second predetermined time from the stop of the power generating operation; and
(ii) an emergency stop process including stopping the power generating operation of the fuel cell, and stopping the supply of the anode fluid and the cathode fluid to the fuel cell,
wherein the control system performs the normal stop process without performing the emergency stop process when the actual flow rate of the cathode fluid is smaller than the target flow rate thereof and a difference between the target flow rate and the actual flow rate continues to be a predetermined value or more for a third predetermined time or more; and
wherein the control system performs a draft resistance recovery process of recovering the draft resistance of the cathode fluid path by removing foreign materials from the cathode fluid path, by feeding a current value, which is less than the specified current value (Ireg) by a predetermined current value, to the driving circuit of the cathode fluid conveying source for a fourth predetermined time before performing the emergency stop process and the normal stop process.

2. The fuel cell system according to claim 1,
wherein the control system includes a current limiting component, and wherein in controlling the power fed to the driving circuit of the cathode fluid conveying source such that the actual flow rate of the cathode fluid follows the target flow rate, when the draft resistance of the cathode gas path increases, the current limiting component prevents an excessive current which is equal to or larger than the specified current value (Ireg) from being fed to the cathode fluid conveying source so as to ease the following of the actual flow rate of the cathode fluid to the target flow rate.

3. The fuel cell system according to claim 1 or 2,
wherein the anode fluid supplied to the anode is a hydrogen gas or a hydrogen containing gas, and the cathode fluid supplied to the cathode is an oxygen containing gas or an oxygen gas.

4. The fuel cell system according to any one of claims 1 to 3, further comprising:
a casing that includes:
an accommodation chamber that surrounds the fuel cell and the cathode fluid conveying source, and
a communication opening that allows the accommodation chamber to communicate with external air and to which foreign materials increasing the draft resistance of the cathode fluid path are attachable,
wherein the communication opening of the casing configures a part of the cathode fluid path.

5. The fuel cell system according to any one of claims 1 to 4, further comprising:
a tank that stores raw material water;
an evaporation unit that produces steam by evaporating the raw material water inside the tank; and
a reforming unit that forms the anode fluid by steam-reforming a fuel using the steam produced in the evaporation unit.

## Patentansprüche

1. Brennstoffzellensystem, mit:
einer Brennstoffzelle, die eine Anode und eine Kathode umfasst;
einem Anodengaspfad, der ein Anodenfluid zu der Anode der Brennstoffzelle zuführt;
einem Kathodengaspfad, der ein gasförmiges Kathodenfluid zu der Kathode der Brennstoffzelle zuführt;
einer Kathodenfluidförderquelle, die in dem Kathodengaspfad bereitgestellt ist, und das Kathodenfluid zu der Kathode der Brennstoffzelle fördert; und
einem Steuerungssystem, das zu einer Antriebsschaltung der Kathodenfluidförderquelle zugeführte Energie derart steuert, dass eine gegenwärtige Durchflussrate des zu der Kathode zugeführten Kathodenfluids einer Solldurchflussrate davon folgt, und das Folgen der gegenwärtigen Durchflussrate des Kathodenfluids auf die Solldurchflussrate erleichtert, wenn ein Zugwiderstand des Kathodengaspfads ansteigt,
**gekennzeichnet durch**:
(i) einen normalen Stoppprozess umfassend Stoppen einer Energieerzeugungsoperation der Brennstoffzelle, Zuführen des Anodenfluids zu der Anode für eine erste vorbestimmte Zeit von dem Stopp der Energieerzeugungsoperation, und Zuführen des Kathodenfluids zu der Kathode um eine zweite vorbestimmte Zeit von dem Stopp der Energieerzeugungsoperation; und
(ii) einen Notfallstoppprozess umfassend Stoppen der Energieerzeugungsoperation der Brennstoffzelle und Stoppen der Zufuhr des Anodenfluids und des Kathodenfluids zu der Brennstoffzelle,
wobei das Steuerungssystem den normalen Stoppprozess ohne Durchführen des Notfallstoppprozesses durchführt, wenn die gegenwärtige Durchflussrate des Kathodenfluids kleiner als die Solldurchflussrate davon ist, und eine Differenz zwischen der Solldurchflussrate und der gegenwärtigen Durchflussrate für eine dritte vorbestimmte Zeit oder mehr damit fortfährt, ein vorbestimmter Wert oder größer zu sein; und
wobei das Steuerungssystem einen Zugwiderstandswiederherstellprozess des Wiederherstellens des Zugwiderstands des Kathodenfluidpfads **durch** Entfernen von Fremdkörpern aus dem Kathodenfluidpfad durch Durchführen eines Stromwerts, der um einen vorbestimmten Stromwert kleiner als der spezifizierte Stromwert (Ireg) ist, an die Antriebsschaltung der Kathodenfluidförderquelle für eine vierte vorbestimmte Zeit durchführt, bevor der Notfallstoppprozess und der normale Stoppprozess durchgeführt werden.

2. Brennstoffzellensystem gemäß Anspruch 1,
wobei das Steuerungssystem eine Strombegrenzungskomponente umfasst, und wobei bei der Steuerung der zu der Antriebsschaltung der Kathodenfluidförderquelle zugeführten Energie, sodass die gegenwärtige Durchflussrate des Kathodenfluids der Solldurchflussrate folgt, wenn der Zugwiderstand des Kathodengaspfads ansteigt, die Strombegrenzungskomponente einen übermäßigen Strom verhindert, der größer oder gleich dem spezifizierten Stromwert (Ireg) ist, um zu der Kathodenfluidförderquelle zugeführt zu werden, um so das Folgen der gegenwärtigen Durchflussrate des Kathodenfluids auf die Solldurchflussrate zu erleichtern.

3. Brennstoffzellensystem gemäß Anspruch 1 oder 2,
wobei das zu der Anode zugeführte Anodenfluid ein Wasserstoffgas oder ein Wasserstoff enthaltendes Gas ist, und das zu der Kathode zugeführte Kathodenfluid ein Sauerstoff enthaltendes Gas oder ein Sauerstoffgas ist.

4. Brennstoffzellensystem gemäß einem der Ansprüche 1 bis 3, weiterhin mit:
einem Gehäuse, das umfasst:
eine Aufnahmekammer, die die Brennstoffzelle und die Kathodenfluidförderquelle umgibt, und
eine Verbindungsöffnung, die ermöglicht, dass die Aufnahmekammer mit der externen Luft in Verbindung kommt, und an die Fremdkörper, die den Zugwiderstand des Kathodenfluidpfads erhöhen, anhaftbar sind,
wobei die Verbindungsöffnung des Gehäuses einen Teil des Kathodenfluidpfads konfiguriert.

5. Brennstoffzellensystem gemäß einem der Ansprüche 1 bis 4, weiterhin mit:
einem Tank, der Rohmaterialwasser speichert;
einer Verdampfungseinheit, die Dampf durch Verdampfen des Rohmaterialwassers innerhalb des Tanks produziert; und
einer Reformereinheit, die das Anodenfluid durch Dampfreformieren eines Brennstoffs durch Verwenden des in der Verdampfungseinheit produzierten Dampfs bildet.

## Revendications

1. Système de pile à combustible comprenant :
une pile à combustible qui comporte une anode et une cathode ;
un trajet de gaz d'anode qui fournit un fluide d'anode à l'anode de la pile à combustible ;
un trajet de gaz de cathode qui fournit un fluide de cathode gazeux à la cathode de la pile à combustible ;
une source d'acheminement de fluide de cathode qui est prévue dans le trajet de gaz de cathode et achemine le fluide de cathode vers la cathode de la pile à combustible ; et
un système de commande qui commande une énergie délivrée à un circuit d'entraînement de la source d'acheminement de fluide de cathode de sorte qu'un débit d'écoulement réel du fluide de cathode fourni à la cathode suit un débit d'écoulement cible de celui-ci et facilite le suivi du débit d'écoulement réel du fluide de cathode par rapport au débit d'écoulement cible lorsqu'une résistance à la traction du trajet de gaz de cathode augmente,
le système de commande est **caractérisé par** :
(i) un processus d'arrêt normal comportant le fait d'arrêter une opération de génération d'énergie de la pile à combustible, de fournir le fluide d'anode à l'anode pendant un premier temps prédéterminé depuis l'arrêt de l'opération de génération d'énergie, et de fournir le fluide de cathode à la cathode pendant un deuxième temps prédéterminé depuis l'arrêt de l'opération de génération d'énergie ; et
(ii) un processus d'arrêt d'urgence comportant le fait d'arrêter l'opération de génération d'énergie de la pile à combustible, et d'arrêter de fournir le fluide d'anode et le fluide de cathode à la pile à combustible,
dans lequel le système de commande exécute le processus d'arrêt normal sans exécuter le processus d'arrêt d'urgence lorsque le débit d'écoulement réel du fluide de cathode est inférieur au débit d'écoulement cible de celui-ci et une différence entre le débit d'écoulement cible et le débit d'écoulement réel continue à être supérieure ou égale à une valeur prédéterminée pendant un temps supérieur ou égal à un troisième temps prédéterminé ; et
dans lequel le système de commande exécute un processus de récupération de résistance à la traction consistant à récupérer la résistance à la traction du trajet de fluide de cathode par une élimination de matériaux étrangers du trajet de fluide de cathode, en délivrant une valeur de courant, qui est inférieure à la valeur de courant spécifiée (Ireg) d'une valeur de courant prédéterminée, au circuit d'entraînement de la source d'acheminement de fluide de cathode pendant un quatrième temps prédéterminé avant d'exécuter le processus d'arrêt d'urgence et le processus d'arrêt normal.

2. Système de pile à combustible selon la revendication 1,
dans lequel le système de commande comporte un composant de limitation de courant, et dans lequel pendant une commande de l'énergie délivrée au circuit d'entraînement de la source d'acheminement de fluide de cathode de sorte que le débit d'écoulement réel du fluide de cathode suit le débit d'écoulement cible, lorsque la résistance à la traction du trajet de gaz de cathode augmente, le composant de limitation de courant empêche un courant excessif qui est supérieur ou égal à la valeur de courant spécifiée (Ireg) d'être délivré à la source d'acheminement de fluide de cathode de manière à faciliter le suivi du débit d'écoulement réel du fluide de cathode par rapport au débit d'écoulement cible.

3. Système de pile à combustible selon la revendication 1 ou 2,
dans lequel le fluide d'anode fourni à l'anode est un gaz hydrogène ou un gaz contenant de l'hydrogène, et le fluide de cathode fourni à la cathode est un gaz contenant de l'oxygène ou un gaz oxygène.

4. Système de pile à combustible selon l'une quelconque des revendications 1 à 3, comprenant en outre :
un boîtier qui comporte :
une chambre de logement qui entoure la pile à combustible et la source d'acheminement de fluide de cathode, et
une ouverture de communication qui permet à la chambre de logement de communiquer avec de l'air extérieur et à laquelle des matériaux étrangers augmentant la résistance à la traction du trajet de fluide de cathode peuvent être fixés,
dans lequel l'ouverture de communication du boîtier configure une partie du trajet de fluide de cathode.

5. Système de pile à combustible selon l'une quelconque des revendications 1 à 4, comprenant en outré
un réservoir qui stocke de l'eau en matière brute ;
une unité d'évaporation qui produit de la vapeur en évaporant l'eau en matière brute à l'intérieur du réservoir ; et
une unité de reformage qui forme le fluide d'anode par reformage à la vapeur d'un combustible à l'aide de la vapeur produite dans l'unité d'évaporation.
